# EUROPEAN PATENT SPECIFICATION

(11) **EP 2 115 655 B1**
(45) Date of publication and mention of the grant of the patent: **04.10.2017**
(21) Application number: 07847655.3
(22) Date of filing: 03.12.2007
(51) Int. Cl.: G06F 21/57, G06F 21/79

(54) **VIRTUAL SECURE ON-CHIP ONE TIME PROGRAMMING**
VIRTUELLE SICHERE EINMALIGE ON-CHIP-PROGRAMMIERUNG
PROGRAMMATION UNIQUE SUR PUCE SÉCURISÉE VIRTUELLE

(30) Priority: 14.12.2006 US 611130
(43) Date of publication of application: 11.11.2009
(73) Proprietor: Telefonaktiebolaget LM Ericsson (publ), 164 83 Stockholm (SE)
(72) Inventor: GEHRMANN, Christian, 22738 Lund (SE); WEGELID, Lennart, 23731 Bjärred (SE); SVENNINGSSON, Martin, 22479 Lund (SE)
(74) Representative: Ericsson
(86) International application number: PCT/EP2007/063144
(87) International publication number: WO 2008/071572

(56) References cited:
- EP-A- 1 645 931
- WO-A-2004/070586
- US-A1- 2003 140 238
- MENEZES A J ET AL: "Handbook of Applied Cryptography, PASSAGE" HANDBOOK OF APPLIED CRYPTOGRAPHY, CRC PRESS SERIES ON DISCRETE MATHEMATICES AND ITS APPLICATIONS, BOCA RATON, FL, CRC PRESS, US, 1997, pages I-II,352, XP002357451 ISBN: 0-8493-8523-7

## Description

### BACKGROUND

The present invention relates to providing one time programming capability on an integrated circuit without using dedicated one-time-programmable memory on that integrated circuit.

For many types of programmable electronic equipment, there is a need to protect the equipment from illegal reprogramming. This is the case, for example, with mobile communications equipment (e.g., cellular telecommunications equipment), in which there is a need not only to ensure that only type approved software is running on the equipment, but also to provide secure locking mechanisms for sensitive information stored in the equipment (e.g., a secure Subscriber Information Module (SIM) Lock mechanism). One important ingredient in a system solution for protection against unauthorized reprogramming is the use of One Time Programmable (OTP) memory. As its name expresses, OTP memory is a type of memory device that permits a single recording of information into a memory area. OTP memories are nonvolatile (i.e., they retain their information even when powered off). Initially, an OTP is in an unprogrammed state. Then, there is a programming phase in which the memory bits are programmed (e.g., one by one or as an entire block in a single operation, the particular implementation being irrelevant to this discussion). Following the recording of the information (hereinafter referred to as "OTP data"), the OTP memory is locked by any one of several techniques that prevents any information from being written in that portion of memory. Often, the information cannot be erased once the OTP enters its "locked" state. In some implementations, erasing is permitted but only when applied to the entire block of memory bits; erasing cannot be selectively applied to individual memory locations.

OTP memory is useful in many types of applications. As just one of many possible examples, before mobile equipment is customized, it must be possible to store the equipment software into a nonvolatile memory (e.g., a flash memory device). Hence, there exists a vulnerable "virgin state", that allows new software and parameters to be programmed into the equipment. It is, therefore, important to make sure that once the equipment has left the factory, it is not be possible to bring the equipment back to this "virgin" state in any uncontrolled manner as this would allow illegal reprogramming. An OTP memory is very useful for this purpose because its contents can be used to hold information that distinguishes equipment that has left the factory from equipment that has not. One can, for example, set a so-called production flag in the OTP memory once the equipment's customization is finalized. This flag then informs the equipment boot and loader software that the equipment is customized and that any reprogramming needs special authorization.

The software utilizing the OTP information is typically executed on a main processor of the equipment (e.g., the main baseband processor of mobile communication equipment, e.g., a mobile phone). This implies that the most secure OTP-based solution is a solution in which the OTP memory resides on the same integrated circuit - "chip"-- (e.g., a baseband processor in a mobile phone) as the main processor, since this will make tampering of the OTP read functionality much more difficult. Unfortunately, it is not always possible to offer on-chip OTP memory due to a number of technical and cost limitations. Consequently the OTP memory must often be realized in an external hardware component. In such an arrangement, there is of necessity a communications link for conveying the OTP readout from the external hardware component to the main processor. This communications link exposes the OTP reading function to manipulations of the data transfer between the OTP memory and the baseband chip. Manipulated data can cause the equipment to appear to be back in its "virgin" state, and therefore susceptible to unauthorized reprogramming.

This threat can be considerably reduced by protecting the OTP read operations by cryptographic means. More specifically, the main processor can determine whether the data that it receives from the communications link between itself and the OTP memory is authentic by issuing a random (or pseudo-random) challenge word (RND) to the external hardware component at or about the time that it initiates a read operation from the OTP memory. The external hardware component reads the data from the OTP memory and uses an encryption procedure to derive a "Message Authentication Code" (MAC) from the OTP data, a previously stored secret key (K), and the random challenge word (RND). The generated MAC is then returned to the main processor along with the OTP data. The main processor, which also maintains a copy of the secret key K, uses the secret key K, the received OTP data, and the issued random challenge word (RND) to calculate a reference MAC' value. If MAC' equals the received MAC value, then the received OTP data is regarded as valid (i.e., it has not been tampered with).

In order to maintain its secrecy, the secret key, K, must be protected from unauthorized access at the external unit. In order to have a complete security solution, it is also necessary to protect the secret key, K, at the unit (e.g., the main processor) that reads the OTP content. For example, if this key were stored in clear text in a ROM on the same integrated circuit that houses the main processor, anyone (in an R&D environment, for example) would be able to dump the contents of this memory and thereby gain access to the secret key K.

There is therefore a need to solve this security problem.

US 2003/140238 discloses a computer system with a secure Bootloader function.

WO 2004/070586 discloses a method for performing testing in a device, in which at least one program is loaded and at least one item of mode data relating to the program is determined. Furthermore, at least one key is generated for use in said program. In the method, at lease two different security levels are determined for the keys to be used in the device. In the method, said security level determined for the key and at least one mode data relating to the program are examined, and on the basis of the examination, it is decided if said key is available for use in the mode indicated in the mode data of the program.

MENEZES A J ET AL: "Handbook of Applied Cryptography", CRC PRESS SERIES ON DISCRETE MATHEMATICES AND ITS APPLICATIONS, BOCA RATON, FL, CRC PRESS, US, 1997, pages 352-368 discusses key hash functions and data integrity and message authentication.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof.

In accordance with one aspect of the present invention, the foregoing and other objects are achieved in embodiments encompassing methods and/or apparatuses for providing one time programming functionality on an integrated circuit as defined in the independent claims. Further details are set forth in the dependent claims.

### BRIEF DESCRIPTION OF THE DRAWINGS

The objects and advantages of the invention will be understood by reading the following detailed description in conjunction with the drawings in which:
FIG. 1 is a block diagram of an arrangement whereby an OTP memory is implemented in a peripheral unit that is external to an integrated circuit housing a main processor.
FIG. 2 is a block diagram of an integrated circuit 201 comprising elements for carrying out various aspects of the invention.
FIG. 3 is a flow chart of steps performed in carrying out various aspects of the invention.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable carrier, such as solid-state memory, magnetic disk, optical disk or carrier wave (such as radio frequency, audio frequency or optical frequency carrier waves) containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments may be referred to herein as "logic configured to" perform a described action, or alternatively as "logic that" performs a described action.

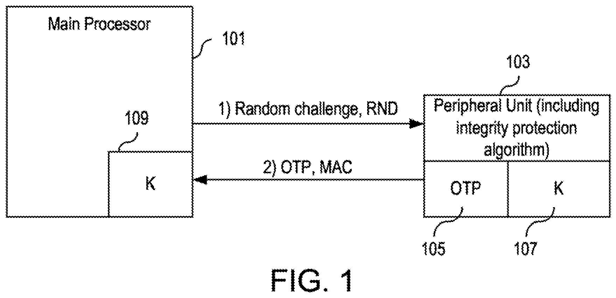

Aspects of the invention assume an authentication procedure as described in the Background section and as illustrated in FIG. 1, which is a block diagram of an exemplary arrangement whereby an OTP memory is implemented in a peripheral unit that is external to an integrated circuit that includes a main processor. Accordingly, an OTP read procedure includes a main processor 101 issuing a random challenge, RND, towards a peripheral unit 103 (step 1) that includes an OTP memory 105. The random challenge (RND), the OTP content and a secret key 107, K, shared between the unit with the main processor and the peripheral unit are used as inputs to an integrity protection algorithm. The OTP content together with a Message Authentication Code (MAC) from the integrity protection algorithm are then sent back to the main processor 101 (step 2). A MAC is a value generated as a function of a message (in this case, the OTP value read out from the peripheral unit's memory) and the secret key, K, stored in the peripheral unit 103. The main processor 101 checks the validity of the OTP value by determining whether the received integrity value (MAC) is what would have been expected based on its own copy of the secret key K 109 and its knowledge of the random challenge RND that was initially sent.

In order to perform the integrity check, the main processor 101 must have access to a copy of the secret key K 109. This is a potential security threat as this key must be exposed each time the OTP memory 105 in the external unit is read. In one aspect, embodiments of the invention eliminate this threat by using a procedure in which the OTP memory 105 is read only once, namely upon booting up of the main processor 101. At this time the main processor 101 will have access to the secret key K stored in a hardware protected memory. If the integrity check of the received OTP data indicates an authentic OTP value, then the main processor 101 stores the OTP content in an internal protected memory (e.g., an internal protected register) located on the same integrated circuit that includes the main processor 101. Once the OTP data is written into this memory/register, that memory/register is hardware protected from any further writing until a restart of the processor is initiated. Any security-critical software that needs to read the OTP content will thereafter read the OTP data from the internal protected memory/register instead of from the "real" OTP memory located in the peripheral unit. In this way a "virtual" OTP memory is provided on the main processor's integrated circuit without the need for actually implementing the OTP memory on that integrated circuit (which might be more expensive and cumbersome than having it on the peripheral unit).

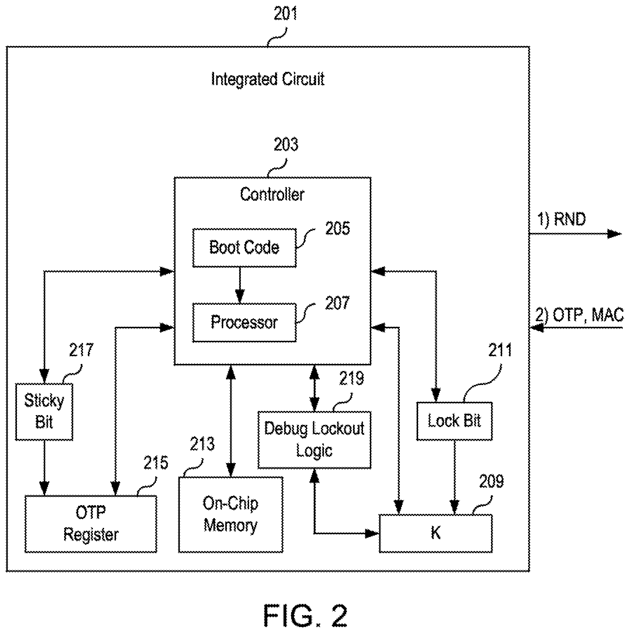

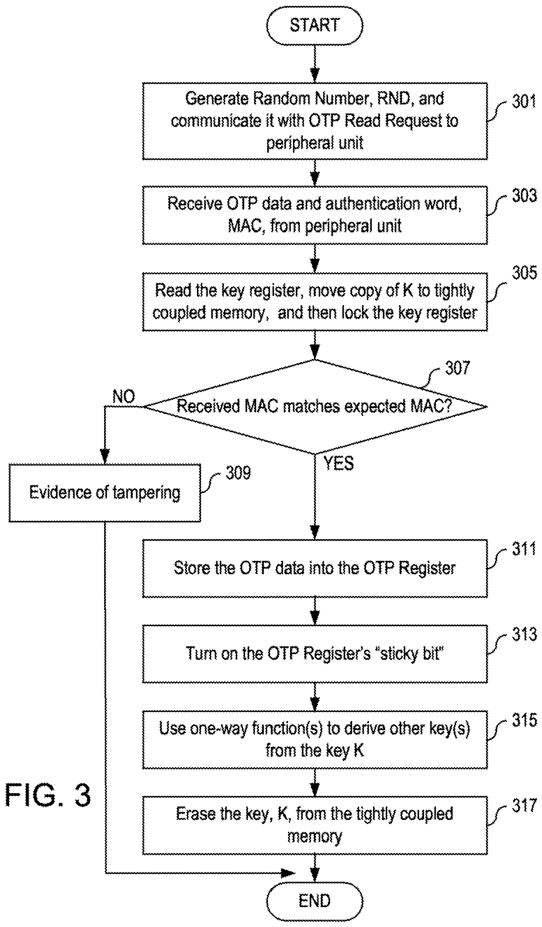

These and other aspects of the invention are now described in greater detail. FIG. 2 is a block diagram of an integrated circuit 201 comprising elements for carrying out various aspects of the invention. FIG. 3 is a flow chart of steps performed in carrying out various aspects of the invention. The steps of FIG. 3 may be performed, for example, by various elements depicted in FIG. 2 and described below.

The integrated circuit 201 includes a controller 203 capable of directing the various actions described herein. In the exemplary embodiment, the controller 203 is programmable and includes a set of program instructions ("boot code" 205) stored in a memory. The controller 203 further includes a processor 207 capable of carrying out the operations specified by the boot code 205. The boot code 205 is the set of program instructions that are performed upon initial power up of the device of which the integrated circuit 201 is a part.

One aspect of the power up procedure includes the integrated circuit 201 obtaining a copy of the OTP data stored in the peripheral unit 103. This involves generating a random number, RND and communicating this with an OTP memory read request to the peripheral unit 103 (step 301). In response to this action, the integrated circuit 201 receives the OTP data and a MAC (step 303).

The integrated circuit 201 needs to determine whether the received OTP data is authentic (i.e., that the received OTP data is an exact replica of the OTP data stored in the peripheral unit 103) and for this purpose it maintains a copy of the secret key, K, in a special key register (or other type of memory device) 209. The key register 209 is "special" in that it permits read operations to be performed only when a predetermined lock bit (or other code) is not asserted. The lock bit is stored in a lock bit register 211. Of course, some mechanism should be provided to prevent unauthorized changing of the contents of the lock bit register 211. For example, the lock bit register 211 can be constructed in such a way as to be self-locking; that is, once the lock bit is set, it locks not only the key register 209, but also the lock bit register 211 itself.

Accordingly, as part of the system boot operation (which is a protected execution routine - its execution, at least during non-debug modes of operation, cannot be taken over by means external to the code, such as unsolicited interrupts, (hardware) debug logic, and the like), the key register 209 is read and the key K is placed into an on-chip memory 213 (e.g., a tightly coupled memory, or any other memory that cannot be manipulated from outside the integrated circuit 201) (step 305). The value in the lock bit register 211 is changed so that the key register 209 will thereafter be unreadable so long as power is maintained to the integrated circuit 201.

The controller 203 then determines whether the received OTP data is authentic by, for example, ascertaining whether the received MAC matches the expected MAC (decision block 307). As mentioned earlier, the controller 203 knows the value of the random number, RND, and also has a copy of the secret key, K, stored in the on-chip memory 213. The controller 203 is therefore capable of determining an expected MAC value.

If the received MAC does not match the expected MAC value ("NO" path out of decision block 307), then the received OTP data cannot be considered authentic. Accordingly, the controller 203 will terminate the normal boot up procedure, and instead perform an application-specific routine associated with any evidence of tampering (step 309). The application-specific routine can, for example, take steps to prevent any further unauthorized actions, such as, but not limited to, erasing the key, K, from the on-chip memory 213.

However, if the received MAC matches the expected MAC value ("YES" path out of decision block 307) then the OTP data can be considered authentic. Accordingly, the received OTP data is stored into a write-lockable memory device (in this exemplary embodiment, the dedicated OTP register 215) that is located on the integrated circuit 201 (step 311). Associated with the OTP register 215 is a sticky bit 217 (e.g., an access right flag that can be assigned to files and directories). After the OTP data has been loaded into the OTP register 215, the controller 203 asserts the sticky bit 217 (step 313) which thereafter prevents any other value from being stored into the OTP register 215 except upon system reset. Any subsequent attempt to re-program the device will require accessing the OTP register 215 to obtain the OTP data, and so long as power is maintained to the device, that data is a valid representation of the data stored in the physical OTP memory 105. Thus, reprogramming will only be permitted if the OTP data obtained from the OTP register 215 indicates that the integrated circuit 201 is in its "virgin" state.

The boot code 205 can, at this point, use the key K (stored in the on-chip memory 213) to derive one or more other keys that can be used by other software modules needing to protect chip data or other content (e.g., to encrypt software to be loaded into a flash memory of a device utilizing the integrated circuit 201) (step 315). These other keys can be stored on the integrated circuit 201, for example in the on-chip memory 213. In order to protect the secrecy of the key K (i.e., to make it extremely difficult if not impossible to derive the value of the original key K from the one or more derived keys), one way function(s), pseudo-random function(s), and/or the like should be used to derive these other keys. Techniques are known in the art for deriving keys from a key K in such a way that an inverse process cannot be performed to obtain the original key K. A full discussion of such techniques is beyond the scope of the invention. The process taking care of any key derived from the original key K must make sure that the derived key is handled in a secure way and that the key(s) are erased once they are used.

Following the step of deriving any other required keys, the key K is no longer needed for so long as the integrated circuit 201 remains powered on. Therefore, in order to prevent any unauthorized access, the controller 203 erases the key K from the on-chip memory 213 (step 317). Consequently, the key K will never (i.e., so long as the integrated circuit remains powered on) be exposed to any other software running in the integrated circuit.

In another aspect, some embodiments of the invention prevent the key K from being exposed in the development and research environment. This is accomplished by using a different "debug key" instead of the "non-debug" key K for debugging and testing purposes. The "debug key" does not need to be stored in a hardware protected memory. In order to protect the non-debug key K in the debug circuit, any read out of the non-debug key K from the key register 209 is prevented by hardware when the circuit operates in debug or test mode (e.g., debug or external boot). The debug lockout logic 219 illustrated in FIG. 2 performs this function. The controller 203 provides information to the debug lockout logic 219 indicating the mode of operation (e.g., debug or external boot) of the integrated circuit 201.

In yet another aspect, some embodiments of the invention further limit the unauthorized used of the key K by utilizing different keys in different integrated circuits 201. For example, in an integrated circuit for use in a mobile communications device, each integrated circuit can have a unique key stored in its key register 209. At the time of customization, the secret key 107 stored in the peripheral unit 103 is then derived from the same unique key stored in the "main" integrated circuit. As used herein, the term "derived" includes, but is not limited to, using an identical key. This has the advantage of creating a unique pairing between the "main" integrated circuit and the peripheral unit. Thus, even if the key from one device falls into the wrong hands, that key cannot be used to enable any unauthorized programming (or other use) of other devices. It also prevents a peripheral device from working with the "main" integrated circuit.

Various aspects of embodiments of the invention provide a secure solution for maintaining OTP data in a manner that provides a virtual OTP memory on the integrated circuit 201 without the need for actual OTP memory hardware on the integrated circuit 201. Furthermore, various embodiments provide a secure derivation of a common key that can be used to protect additional data without the need for additional hardware storage of this key.

The invention has been described with reference to particular embodiments. However, it will be readily apparent to those skilled in the art that it is possible to embody the invention in specific forms other than those of the embodiment described above. The described embodiments are merely illustrative and should not be considered restrictive in any way. The scope of the invention is given by the appended claims, rather than the preceding description, and all variations and equivalents which fall within the range of the claims are intended to be embraced therein.

## Claims

1. A method of providing one time programming functionality on an integrated circuit (201), the method comprising:
receiving one time programmable data from a source that is external to the integrated circuit (201);
determining whether the received one time programmable data is authentic;
in response to determining that the received one time programmable data is authentic, storing the received one time programmable data in a write-lockable memory device (215) that is located on the integrated circuit (201), and thereafter locking the write-lockable memory device (215) to prevent any further writing to the write-lockable memory device (215) for so long as power is maintained to the integrated circuit (201); and
from the moment of locking the write-lockable memory device (215) onward for so long as power is maintained to the integrated circuit (201), retrieving the one time programmable data from the write-lockable memory device (215) whenever the one time programmable data is needed,
wherein determining whether the received one time programmable data is authentic comprises:
making a challenge word available to a recipient that is external (103) to the integrated circuit (201);
receiving a message authentication code from the source that is external (103) to the integrated circuit (201);
if the integrated circuit (201) is operating in a non-debug mode, then:
retrieving a non-debug key from a key memory device (209) located on the integrated circuit (201); and
using the non-debug key and the message authentication code to determine whether the received one time programmable data is authentic; and
if the integrated circuit (201) is operating in a debug mode, then:
locking the key memory device (209) to prevent any further reading of the key memory device (209) for so long as power is maintained to the integrated circuit (201) operating in debug mode;
retrieving a debug key from another memory device located on the integrated circuit (201); and
using the debug key and the message authentication code to determine whether the received one time programmable data is authentic.

2. The method of claim 1, comprising storing the retrieved non-debug key in another memory device on the integrated circuit (201) for retrieval during a power-up procedure performed by the integrated circuit (201).

3. The method of claim 2, comprising using one or more one way functions or one or more pseudo-random functions to derive one or more other keys from the retrieved non-debug key stored in said another memory device.

4. The method of claim 2, comprising erasing the retrieved non-debug key from said another memory device after the power-up procedure has no further use for the retrieved non-debug key.

5. The method of claim 1, comprising:
initially storing the non-debug key into the key memory device (209), wherein the non-debug key is different from a key stored in another key memory device of another integrated circuit; and
deriving from the non-debug key, a key for use in a peripheral device (103) that includes the source that is external to the integrated circuit (201).

6. The method of claim 1, comprising:
using the one time programmable data to determine whether it is possible to store program code into a memory (213) located on the integrated circuit (201) without additional authorization.

7. The method of claim 1, comprising:
if the integrated circuit (201) is operating in a non-debug mode, then:
after retrieving the non-debug key from the key memory device (209), locking the key memory device (209) to prevent any further reading of the key memory device (209) for so long as power is maintained to the integrated circuit (201); and
if the integrated circuit (201) is operating in a debug mode, then:
after retrieving the debug key from the key memory device (209), locking the key memory device (209) to prevent any further reading of the key memory device (209) for so long as power is maintained to the integrated circuit (201).

8. An apparatus for providing one time programming functionality on an integrated circuit (201), the apparatus comprising:
logic that receives one time programmable data from a source that is external (103) to the integrated circuit (201);
logic that determines whether the received one time programmable data is authentic;
logic that, in response to determining that the received one time programmable data is authentic, stores the received one time programmable data in a write-lockable memory device (215) that is located on the integrated circuit (201), and thereafter locks the write-lockable memory device (215) to prevent any further writing to the write-lockable memory device (215) for so long as power is maintained to the integrated circuit (201); and
logic that, from the moment of locking the write-lockable memory device (215) onward for so long as power is maintained to the integrated circuit (201), retrieves the one time programmable data from the write-lockable memory device (215) whenever the one time programmable data is needed,
wherein the logic that determines whether the received one time programmable data is authentic comprises:
logic that makes a challenge word available to a recipient that is external (103) to the integrated circuit (201);
logic that receives a message authentication code from the source that is external (103) to the integrated circuit (201);
logic that, if the integrated circuit (201) is not operating in a debug mode, performs:
retrieving a non-debug key from a key memory device (209) located on the integrated circuit (201); and
using the non-debug key and the message authentication code to determine whether the received one time programmable data is authentic; and
logic that, if the integrated circuit (201) is operating in a debug mode, performs:
locking the key memory device (209) to prevent any further reading of the key memory device (209) for so long as power is maintained to the integrated circuit (201) operating in debug mode;
retrieving a debug key from another memory device located on the integrated circuit (201); and
using the debug key and the message authentication code to determine whether the received one time programmable data is authentic.

9. The apparatus of claim 8, comprising logic that stores the retrieved non-debug key in another memory device on the integrated circuit (201) for retrieval during a power-up procedure performed by the integrated circuit (201).

10. The apparatus of claim 9, comprising logic that uses one or more one way functions or one or more pseudo-random functions to derive one or more other keys from the retrieved non-debug key stored in said another memory device.

11. The apparatus of claim 9, comprising logic that erases the retrieved non-debug key from said another memory device after the power-up procedure has no further use for the retrieved non-debug key.

12. The apparatus of claim 8, comprising:
logic that initially stores the non-debug key into the key memory device (209), wherein the non-debug key is different from a key stored in another key memory device of another integrated circuit; and
logic that derives from the non-debug key, a key for use in a peripheral device (103) that includes the source that is external to the integrated circuit (201).

13. The apparatus of claim 8, comprising logic that uses the one time programmable data to determine whether it is possible to store program code into a memory (213) located on the integrated circuit (201) without additional authorization.

14. The apparatus of claim 8, comprising:
logic that, if the integrated circuit (201) is operating in a non-debug mode, performs:
after retrieving the non-debug key from the key memory device (209), locking the key memory device (209) to prevent any further reading of the key memory device (209) for so long as power is maintained to the integrated circuit (201); and
logic that, if the integrated circuit (201) is operating in a debug mode, performs:
after retrieving the debug key from the key memory device (209), locking the key memory device (209) to prevent any further reading of the key memory device (209) for so long as power is maintained to the integrated circuit (201).

## Patentansprüche

1. Verfahren zur Bereitstellung einmaliger Programmierfunktionalität auf einer integrierten Schaltung (201), wobei das Verfahren umfasst:
Empfangen einmalig programmierbarer Daten von einer Quelle, die außerhalb der integrierten Schaltung (201) ist;
Bestimmen, ob die empfangenen einmalig programmierbaren Daten authentisch sind;
Speichern in Reaktion auf ein Bestimmen, dass die empfangenen einmalig programmierbaren Daten authentisch sind, der empfangenen einmalig programmierbarer Daten in einer schreibsperrbaren Speichervorrichtung (215), die sich auf der integrierten Schaltung (201) befindet, und anschließendes Sperren der schreibsperrbaren Speichervorrichtung (215), um jegliches weitere Schreiben in die schreibsperrbare Speichervorrichtung (215) zu verhindern, solange Leistung zur integrierten Schaltung (201) aufrechterhalten wird; und
Abrufen ab dem Zeitpunkt des Sperrens der schreibsperrbaren Speichervorrichtung (215), solange Leistung zur integrierten Schaltung (201) aufrechterhalten wird, der einmalig programmierbaren Daten aus der schreibsperrbaren Speichervorrichtung (215), wann immer die einmalig programmierbaren Daten benötigt werden,
wobei das Bestimmen, ob die empfangenen einmalig programmierbaren Daten authentisch sind, umfasst:
Verfügbarmachen eines Abfrageworts für einen Empfänger, der außerhalb (103) der integrierten Schaltung (201) ist;
Empfangen eines Nachrichtenauthentifizierungscodes von der Quelle, die außerhalb (103) der integrierten Schaltung (201) ist;
falls die integrierte Schaltung (201) in einem Nicht-Debug-Modus funktioniert, dann:
Abrufen eines Nicht-Debug-Schlüssels aus einer Schlüsselspeichervorrichtung (209), die sich auf der integrierten Schaltung (201) befindet; und
Verwenden des Nicht-Debug-Schlüssels und des Nachrichtenauthentifizierungscodes zum Bestimmen, ob die empfangenen einmalig programmierbaren Daten authentisch sind; und
falls die integrierte Schaltung (201) in einem Debug-Modus funktioniert, dann:
Sperren der Schlüsselspeichervorrichtung (209), um jegliches weitere Lesen der Schlüsselspeichervorrichtung (209) zu verhindern, solange Leistung zur integrierten Schaltung (201), die im Debug-Modus funktioniert, aufrechterhalten wird;
Abrufen eines Debug-Schlüssels aus einer anderen Speichervorrichtung, die sich auf der integrierten Schaltung (201) befindet; und
Verwenden des Debug-Schlüssels und des Nachrichtenauthentifizierungscodes zum Bestimmen, ob die empfangenen einmalig programmierbaren Daten authentisch sind.

2. Verfahren nach Anspruch 1, umfassend ein Speichern des abgerufenen Nicht-Debug-Schlüssels in einer anderen Speichervorrichtung auf der integrierten Schaltung (201) zum Abrufen während eines von der integrierten Schaltung (201) durchgeführten Einschaltvorgangs.

3. Verfahren nach Anspruch 2, umfassend ein Verwenden einer oder mehrerer Einwegfunktionen oder einer oder mehrerer Pseudozufallsfunktionen zum Ableiten eines oder mehrerer anderer Schlüssel vom abgerufenen Nicht-Debug-Schlüssel, der in der anderen Speichervorrichtung gespeichert wird.

4. Verfahren nach Anspruch 2, umfassend ein Löschen des abgerufenen Nicht-Debug-Schlüssels aus der anderen Speichervorrichtung, nachdem der Einschaltvorgang keine weitere Verwendung mehr für den abgerufenen Nicht-Debug-Schlüssel hat.

5. Verfahren nach Anspruch 1, umfassend:
anfängliches Speichern des Nicht-Debug-Schlüssels in der Speicherschlüsselvorrichtung (209), wobei der Nicht-Debug-Schlüssel von einem Schlüssel, der in einer anderen Schlüsselspeichervorrichtung einer anderen integrierten Schaltung gespeichert wird, verschieden ist; und
Ableiten vom Nicht-Debug-Schlüssel eines Schlüssels zur Verwendung in einer Peripherievorrichtung (103), welche die Quelle umfasst, die außerhalb der integrierten Schaltung (201) ist.

6. Verfahren nach Anspruch 1, umfassend:
Verwenden der einmalig programmierbaren Daten zum Bestimmen, ob es möglich ist, Programmcode ohne zusätzliche Autorisierung in einem Speicher (213) zu speichern, der sich auf der integrierten Schaltung (201) befindet.

7. Verfahren nach Anspruch 1, umfassend:
falls die integrierte Schaltung (201) in einem Nicht-Debug-Modus funktioniert, dann:
Sperren der Schlüsselspeichervorrichtung (209) nach dem Abrufen des Nicht-Debug-Schlüssels aus der Schlüsselspeichervorrichtung (209), um jegliches weitere Lesen der Schlüsselspeichervorrichtung (209) zu verhindern, solange Leistung zur integrierten Schaltung (201) aufrechterhalten wird;
falls die integrierte Schaltung (201) in einem Debug-Modus funktioniert, dann:
Sperren der Schlüsselspeichervorrichtung (209) nach dem Abrufen des Debug-Schlüssels aus der Schlüsselspeichervorrichtung (209), um jegliches weitere Lesen der Schlüsselspeichervorrichtung (209) zu verhindern, solange Leistung zur integrierten Schaltung (201) aufrechterhalten wird.

8. Vorrichtung zum Bereitstellen einmaliger Programmierfunktionalität auf einer integrierten Schaltung (201), wobei die Vorrichtung umfasst:
Logik, die einmalig programmierbare Daten von einer Quelle empfängt, die außerhalb (103) der integrierten Schaltung (201) ist;
Logik, die bestimmt, ob die empfangenen einmalig programmierbaren Daten authentisch sind;
Logik, die in Reaktion auf ein Bestimmen, dass die empfangenen einmalig programmierbaren Daten authentisch sind, die empfangenen einmalig programmierbaren Daten in einer schreibsperrbaren Speichervorrichtung (215) speichert, die sich auf der integrierten Schaltung (201) befindet, und anschließend die schreibsperrbare Speichervorrichtung (215) sperrt, um jegliches weitere Schreiben in die schreibsperrbare Speichervorrichtung (215) zu verhindern, solange Leistung zur integrierten Schaltung (201) aufrechterhalten wird; und
Logik, die ab dem Zeitpunkt des Sperrens der schreibsperrbaren Speichervorrichtung (215), solange Leistung zur integrierten Schaltung (201) aufrechterhalten wird, die einmalig programmierbaren Daten aus der schreibsperrbaren Speichervorrichtung (215) abruft, wann immer die einmalig programmierbaren Daten benötigt werden,
wobei die Logik, die bestimmt, ob die empfangenen einmalig programmierbaren Daten authentisch sind, umfasst:
Logik, die ein Abfragewort für einen Empfänger verfügbar macht, der außerhalb (103) der integrierten Schaltung (201) ist;
Logik, die einen Nachrichtenauthentifizierungscode von der Quelle empfängt, die außerhalb (103) der integrierten Schaltung (201) ist;
Logik, die, falls die integrierte Schaltung (201) nicht in einem Debug-Modus funktioniert, Folgendes durchführt:
Abrufen eines Nicht-Debug-Schlüssels aus einer Schlüsselspeichervorrichtung (209), die sich auf der integrierten Schaltung (201) befindet; und
Verwenden des Nicht-Debug-Schlüssels und des Nachrichtenauthentifizierungscodes zum Bestimmen,
ob die empfangenen einmalig programmierbaren Daten authentisch sind; und
Logik, die, falls die integrierte Schaltung (201) in einem Debug-Modus funktioniert, Folgendes durchführt:
Sperren der Schlüsselspeichervorrichtung (209), um jegliches weitere Lesen der Schlüsselspeichervorrichtung (209) zu verhindern, solange Leistung zur integrierten Schaltung (201), die im Debug-Modus funktioniert, aufrechterhalten wird;
Abrufen eines Debug-Schlüssels aus einer anderen Speichervorrichtung, die sich auf der integrierten Schaltung (201) befindet; und
Verwenden des Debug-Schlüssels und des Nachrichtenauthentifizierungscodes zum Bestimmen, ob die empfangenen einmalig programmierbaren Daten authentisch sind.

9. Vorrichtung nach Anspruch 8, umfassend Logik, die den abgerufenen Nicht-Debug-Schlüssel in einer anderen Speichervorrichtung auf der integrierten Schaltung (201) zum Abrufen während eines von der integrierten Schaltung (201) durchgeführten Einschaltvorgangs speichert.

10. Vorrichtung nach Anspruch 9, umfassend Logik, die eine oder mehrere Einwegfunktionen oder eine oder mehrere Pseudozufallsfunktionen verwendet, um einen oder mehrere andere Schlüssel vom abgerufenen Nicht-Debug-Schlüssel abzuleiten, der in der anderen Speichervorrichtung gespeichert wird.

11. Vorrichtung nach Anspruch 9, umfassend Logik, die den abgerufenen Nicht-Debug-Schlüssel aus der anderen Speichervorrichtung löscht, nachdem der Einschaltvorgang keine weitere Verwendung mehr für den abgerufenen Nicht-Debug-Schlüssel hat.

12. Vorrichtung nach Anspruch 8, umfassend:
Logik, die den Nicht-Debug-Schlüssel in der Speicherschlüsselvorrichtung (209) anfänglich speichert, wobei der Nicht-Debug-Schlüssel von einem Schlüssel, der in einer anderen Schlüsselspeichervorrichtung einer anderen integrierten Schaltung gespeichert wird, verschieden ist; und
Logik, die vom Nicht-Debug-Schlüssel einen Schlüssel zur Verwendung in einer Peripherievorrichtung (103) ableitet, welche die Quelle umfasst, die außerhalb der integrierten Schaltung (201) ist.

13. Vorrichtung nach Anspruch 8, umfassend Logik, welche die einmalig programmierbaren Daten verwendet, um zu bestimmen, ob es möglich ist, Programmcode ohne zusätzliche Autorisierung in einem Speicher (213) zu speichern, der sich auf der integrierten Schaltung (201) befindet.

14. Vorrichtung nach Anspruch 8, umfassend:
Logik, die, falls die integrierte Schaltung (201) in einem Nicht-Debug-Modus funktioniert, Folgendes durchführt:
Sperren der Schlüsselspeichervorrichtung (209) nach dem Abrufen des Nicht-Debug-Schlüssels aus der Schlüsselspeichervorrichtung (209), um jegliches weitere Lesen der Schlüsselspeichervorrichtung (209) zu verhindern, solange Leistung zur integrierten Schaltung (201) aufrechterhalten wird;
Logik, die, falls die integrierte Schaltung (201) in einem Debug-Modus funktioniert, Folgendes durchführt:
Sperren der Schlüsselspeichervorrichtung (209) nach dem Abrufen des Debug-Schlüssels aus der Schlüsselspeichervorrichtung (209), um jegliches weitere Lesen der Schlüsselspeichervorrichtung (209) zu verhindern, solange Leistung zur integrierten Schaltung (201) aufrechterhalten wird.

## Revendications

1. Procédé de fourniture d'une fonctionnalité de programmation unique sur un circuit intégré (201), le procédé comprenant :
la réception de données à programmation unique en provenance d'une source qui est externe au circuit intégré (201) ;
la détermination si les données à programmation unique reçues sont authentiques ;
en réponse à la détermination que les données à programmation unique reçues sont authentiques, la mémorisation des données à programmation unique reçues dans un dispositif de mémoire à verrouillage d'écriture (215) qui est situé sur le circuit intégré (201), puis le verrouillage du dispositif de mémoire à verrouillage d'écriture (215) pour empêcher toute autre écriture sur le dispositif de mémoire à verrouillage d'écriture (215) aussi longtemps que le circuit intégré (201) est maintenu sous tension ; et
à partir du verrouillage du dispositif de mémoire à verrouillage d'écriture (215) et aussi longtemps que le circuit intégré (201) est maintenu sous tension, la récupération des données à programmation unique depuis le dispositif de mémoire à verrouillage d'écriture (215) en cas de besoin des données à programmation unique,
dans lequel la détermination si les données à programmation unique reçues sont authentiques comprend :
la mise d'un mot de défi à disposition d'un destinataire qui est externe (103) au circuit intégré (201) ;
la réception d'un code d'authentification de message en provenance de la source qui est externe (103) au circuit intégré (201) ;
si le circuit intégré (201) fonctionne dans un mode de non-débogage, alors :
la récupération d'une clé de non-débogage depuis un dispositif de mémoire de clé (209) situé sur le circuit intégré (201) ; et
l'utilisation de la clé de non-débogage et du code d'authentification de message pour déterminer si les données à programmation unique reçues sont authentiques ; et
si le circuit intégré (201) fonctionne dans un mode de débogage, alors :
le verrouillage du dispositif de mémoire de clé (209) pour empêcher toute autre lecture du dispositif de mémoire de clé (209) aussi longtemps que le circuit intégré (201) fonctionnant en mode de débogage est maintenu sous tension ;
la récupération d'une clé de débogage depuis un autre dispositif de mémoire situé sur le circuit intégré (201) ; et
l'utilisation de la clé de débogage et du code d'authentification de message pour déterminer si les données à programmation unique reçues sont authentiques.

2. Procédé selon la revendication 1, comprenant la mémorisation de la clé de non-débogage récupérée dans un autre dispositif de mémoire sur le circuit intégré (201) pour la récupérer au cours d'une procédure de mise sous tension effectuée par le circuit intégré (201).

3. Procédé selon la revendication 2, comprenant l'utilisation d'une ou plusieurs fonctions unidirectionnelles ou d'une ou plusieurs fonctions pseudo-aléatoires pour dériver une ou plusieurs autres clés à partir de la clé de non-débogage récupérée mémorisée dans ledit autre dispositif de mémoire.

4. Procédé selon la revendication 2, comprenant l'effacement de la clé de non-débogage récupérée dudit autre dispositif de mémoire après que la procédure de mise sous tension n'a plus besoin de la clé de non-débogage récupérée.

5. Procédé selon la revendication 1, comprenant :
la mémorisation initiale de la clé de non-débogage dans le dispositif de mémoire de clé (209), dans lequel la clé de non-débogage est différente d'une clé mémorisée dans un autre dispositif de mémoire de clé d'un autre circuit intégré ; et
la dérivation, à partir de la clé de non-débogage, d'une clé à utiliser dans un dispositif périphérique (103) comprenant la source qui est externe au circuit intégré (201).

6. Procédé selon la revendication 1, comprenant :
l'utilisation des données à programmation unique pour déterminer s'il est possible de mémoriser un code de programme dans une mémoire (213) située sur le circuit intégré (201) sans autorisation supplémentaire.

7. Procédé selon la revendication 1, comprenant :
si le circuit intégré (201) fonctionne dans un mode de non-débogage, alors :
après la récupération de la clé de non-débogage depuis le dispositif de mémoire de clé (209), le verrouillage du dispositif de mémoire de clé (209) pour empêcher toute autre lecture du dispositif de mémoire de clé (209) aussi longtemps que le circuit intégré (201) est maintenu sous tension ; et
si le circuit intégré (201) fonctionne dans un mode de débogage, alors :
après la récupération de la clé de débogage depuis le dispositif de mémoire de clé (209), le verrouillage du dispositif de mémoire de clé (209) pour empêcher toute autre lecture du dispositif de mémoire de clé (209) aussi longtemps que le circuit intégré (201) est maintenu sous tension.

8. Appareil de fourniture d'une fonctionnalité de programmation unique sur un circuit intégré (201), l'appareil comprenant :
une logique pour la réception de données à programmation unique en provenance d'une source qui est externe (103) au circuit intégré (201) ;
une logique pour la détermination si les données à programmation unique reçues sont authentiques ;
une logique pour, en réponse à la détermination que les données à programmation unique reçues sont authentiques, la mémorisation des données à programmation unique reçues dans un dispositif de mémoire à verrouillage d'écriture (215) qui est situé sur le circuit intégré (201), puis le verrouillage du dispositif de mémoire à verrouillage d'écriture (215) pour empêcher toute autre écriture sur le dispositif de mémoire à verrouillage d'écriture (215) aussi longtemps que le circuit intégré (201) est maintenu sous tension ; et
une logique pour, à partir du verrouillage du dispositif de mémoire à verrouillage d'écriture (215) et aussi longtemps que le circuit intégré (201) est maintenu sous tension, la récupération des données à programmation unique depuis le dispositif de mémoire à verrouillage d'écriture (215) en cas de besoin des données à programmation unique,
dans lequel la logique pour la détermination si les données à programmation unique reçues sont authentiques comprend :
une logique pour la mise d'un mot de défi à disposition d'un destinataire qui est externe (103) au circuit intégré (201) ;
une logique pour la réception d'un code d'authentification de message en provenance de la source qui est externe (103) au circuit intégré (201) ;
une logique pour, si le circuit intégré (201) ne fonctionne pas dans un mode de débogage, effectuer :
la récupération d'une clé de non-débogage depuis un dispositif de mémoire de clé (209) situé sur le circuit intégré (201) ; et
l'utilisation de la clé de non-débogage et du code d'authentification de message pour déterminer si les données à programmation unique reçues sont authentiques ; et
une logique pour, si le circuit intégré (201) fonctionne dans un mode de débogage, effectuer :
le verrouillage du dispositif de mémoire de clé (209) pour empêcher toute autre lecture du dispositif de mémoire de clé (209) aussi longtemps que le circuit intégré (201) fonctionnant en mode de débogage est maintenu sous tension ;
la récupération d'une clé de débogage depuis un autre dispositif de mémoire situé sur le circuit intégré (201) ; et
l'utilisation de la clé de débogage et du code d'authentification de message pour déterminer si les données à programmation unique reçues sont authentiques.

9. Appareil selon la revendication 8, comprenant une logique pour la mémorisation de la clé de non-débogage récupérée dans un autre dispositif de mémoire sur le circuit intégré (201) pour la récupérer au cours d'une procédure de mise sous tension effectuée par le circuit intégré (201).

10. Appareil selon la revendication 9, comprenant une logique pour l'utilisation d'une ou plusieurs fonctions unidirectionnelles ou d'une ou plusieurs fonctions pseudo-aléatoires pour dériver une ou plusieurs autres clés à partir de la clé de non-débogage récupérée mémorisée dans ledit autre dispositif de mémoire.

11. Appareil selon la revendication 9, comprenant une logique pour l'effacement de la clé de non-débogage récupérée dudit autre dispositif de mémoire après que la procédure de mise sous tension n'a plus besoin de la clé de non-débogage récupérée.

12. Appareil selon la revendication 8, comprenant :
une logique pour la mémorisation initiale de la clé de non-débogage dans le dispositif de mémoire de clé (209), dans lequel la clé de non-débogage est différente d'une clé mémorisée dans un autre dispositif de mémoire de clé d'un autre circuit intégré ; et
une logique pour la dérivation, à partir de la clé de non-débogage, d'une clé à utiliser dans un dispositif périphérique (103) comprenant la source qui est externe au circuit intégré (201).

13. Appareil selon la revendication 8, comprenant une logique pour l'utilisation des données à programmation unique pour déterminer s'il est possible de mémoriser un code de programme dans une mémoire (213) située sur le circuit intégré (201) sans autorisation supplémentaire.

14. Appareil selon la revendication 8, comprenant :
une logique pour, si le circuit intégré (201) fonctionne dans un mode de non-débogage, effectuer :
après la récupération de la clé de non-débogage depuis le dispositif de mémoire de clé (209), le verrouillage du dispositif de mémoire de clé (209) pour empêcher toute autre lecture du dispositif de mémoire de clé (209) aussi longtemps que le circuit intégré (201) est maintenu sous tension ; et
une logique pour, si le circuit intégré (201) fonctionne dans un mode de débogage, effectuer :
après la récupération de la clé de débogage depuis le dispositif de mémoire de clé (209), le verrouillage du dispositif de mémoire de clé (209) pour empêcher toute autre lecture du dispositif de mémoire de clé (209) aussi longtemps que le circuit intégré (201) est maintenu sous tension.
